**Europäisches Patentamt**

**European Patent Office**

**Office européen des brevets**

(11) Veröffentlichungsnummer : **0 257 172 B1**

(19)

(12) **EUROPÄISCHE PATENTSCHRIFT**

(45) Veröffentlichungstag der Patentschrift :
06.02.91 Patentblatt 91/06

(51) Int. Cl.⁵ : **C21B 13/14, C21C 5/28,
C21C 5/56**

(21) Anmeldenummer : **86890228.9**

(22) Anmeldetag : **12.08.86**

(54) **Hüttenwerk sowie Verfahren zum Betrieb eines solchen Hüttenwerkes.**

(43) Veröffentlichungstag der Anmeldung :
02.03.88 Patentblatt 88/09

(45) Bekanntmachung des Hinweises auf die
Patenterteilung :
06.02.91 Patentblatt 91/06

(84) Benannte Vertragsstaaten :
**AT BE DE FR GB IT LU NL SE**

(56) Entgegenhaltungen :
EP-A- 0 126 391
EP-A- 0 179 014
EP-A- 0 179 734
DE-B- 1 184 363

(73) Patentinhaber : **VOEST-ALPINE
INDUSTRIEANLAGENBAU GESELLSCHAFT
m.b.H.
Turmstrasse 44
A-4020 Linz (AT)**

(72) Erfinder : **Die Erfinder haben auf ihre Nennung
verzichtet**

(74) Vertreter : **Wolfram, Gustav, Dipl.-Ing.
Schwindgasse 7 P.O. Box 205
A-1041 Wien (AT)**

## Beschreibung

Verfahren zur Erzeugung von Stahl aus oxidischen Eisenträgern

Die Erfindung betrifft ein Verfahren zur Erzeugung von Stahl aus oxidischen Eisenträgern, wie Erz, in einem Hüttenwerk mit einer Direktreduktionsanlage zur Erzeugung von Eisenschwamm, einem Einschmelzvergaser und einem Blasstahlkonverter.

In konventionellen Hüttenwerken, die Stahl in Blasstahlkonvertern durch Auf– und/oder Einblasen von Sauerstoff auf oder in flüssiges Roheisen erzeugen, wird das Roheisen in Hochöfen unter Einsatz von Erzen und hochwertigem Koks hergestellt. Da die Roheisenerzeugung in großen Hochöfen am wirtschaftlichsten ist, geht die Entwicklung in Richtung von Hochöfen mit höchster Leistung, die über möglichst lange Zeiträume ohne Unterbrechung betrieben werden müssen. Bei Verwendung derartiger Hochöfen müssen stahlwerksseitig große Roheisenmengen abgenommen werden, d.h. es ist eine Mehrzahl von Blasstahlkonvertern mit ebenfalls hoher Leistung erforderlich, um das Roheisen aufzuarbeiten. Eine Speicherung des erzeugten flüssigen Roheisens ist nur bedingt möglich. Ein Vergießen von flüssigem Roheisen zu Masseln bei stahlwerksseitigen Unterbrechungen bzw. Betriebsstörungen ist unwirtschaftlich.

Roheisen kann nach einer anderen Technik auch in einer Anlage, bestehend im wesentlichen aus einem Reduktionsschachtofen und einem Einschmelzvergaser, erzeugt werden. Ein derartiges Verfahren ist in der EP-A-0 179 014 beschrieben. Nach diesem Verfahren wird das Eisenerz in den Reduktionsschachtofen eingebracht und dort zu Eisenschwamm reduziert. Der Eisenschwamm wird in der Folge im Einschmelzvergaser in eine Roheisenschmelze umgewandelt. Das im Einschmelzvergaser erzeugte Gas wird als Reduktionsgas in den Reduktionsschachtofen geleitet. Das aus dem Reduktionsschachtofen austretende Gichtgas wird nach Entfernen von $CO_2$ und $H_2O$ zurückgeführt, derart, daß es zur Bildung des Reduktionsgases im Einschmelzvergaser herangezogen und außerdem als Kühlgas für das im Einschmelzvergaser erzeugte Reduktionsgas verwendet wird.

Stahl wird heute vorwiegend in konventionellen Hüttenwerken, wie sie oben beschrieben sind, erzeugt, wobei in den Blasstahlkonvertern vorwiegend Stahlschrott als Kühlmittel eingesetzt wird. Die Verwendung von Schrott stellt den Stahlwerker vor Probleme, wenn der Schrott zugekauft wird und seine genaue Zusammensetzung nicht bekannt ist. Mit solchem Schrott werden oftmals unerwünschte Begleitelemente in die Metallschmelze eingebracht, welche im Frischverfahren nicht mehr entfernt werden können.

Wenn anstelle von verunreinigtem Schrott Erz als Kühlmittel verwendet wird, welches eine etwa drei- bis vierfach höhere Kühlwirkung als Schrott aufweist, muß verhältnismäßig mehr Roheisen eingesetzt werden, was den Prozeß verteuert.

Die Erfindung bezweckt die Vermeidung der geschilderten Nachteile und Schwierigkeiten und stellt sich die Aufgabe, ein Verfahren zur Erzeugung von Stahl zur Verfügung zu stellen, mit welchem die Erzeugung von Stahl hoher Reinheit aus stückigen oxidischen Eisenträgern möglich ist, wobei in wirtschaftlicher Weise und ohne hohe Investitionskosten flüssiges Roheisen hergestellt werden kann.

Diese Aufgabe wird erfindungsgemäß so gelöst, daß Stahl aus oxidischen Eisenträgern, wie Erz, in einem Hüttenwerk mit

– einer Direktreduktionsanlage zur Erzeugung von Eisenschwamm,
– einem Einschmelzvergaser und
– einem einzigen Blasstahlkonverter hergestellt wird, und die Direktreduktionsanlage austragsseitig über Transporteinrichtungen für Eisenschwamm sowohl mit dem Einschmelzvergaser als auch mit dem Blasstahlkonverter und der Einschmelzvergaser über eine Transportlinie für flüssiges Roheisen mit dem Blasstahlkonverter in Verbindung stehen, wobei
– stückige oxidische Eisenträger in die Reduktionszone der Direktreduktionsanlage eingebracht und durch im Einschmelzvergaser aus Kohle und sauerstoffhältigem Gas erzeugtes Reduktionsgas reduziert werden,
– das reduzierte Produkt – Eisenschwamm – zum Teil in heißem Zustand in die Einschmelzzone des Einschmelzvergasers eingebracht, dort erhitzt, verflüssigt und aufgekohlt wird, wobei flüssiges Roheisen entsteht,
– zu einem anderen Teil aus der Direktreduktionsanlage ausgetragen wird,
– flüssiges Roheisen aus dem Einschmelzvergaser sowie Eisenschwamm aus der Direktreduktionsanlage in den Blasstahlkonverter chargiert und gefrischt werden und
– als Festeinsatz für den Blasstahlkonverter ausschließlich Eisenschwamm verwendet wird.

Gegenüber konventionellen Verfahren hat das erfindungsgemäße Verfahren den Vorteil, daß es ein problemloses An- und Abfahren des Hüttenwerkes erlaubt und daß stahlwerksseitig nur ein einziger Konverter nötig ist. Dieser kann nach dem Aufblasverfahren, nach dem Bodenblasverfahren oder nach einer Kombination beider Verfahren arbeiten. Er braucht nicht als Wechseltiegel ausgeführt zu sein. Während einer Neuzustellung des Konverters, wobei zur Erneuerung des Mauerwerkes eine Zeitdauer von dreieinhalb bis vier Tagen erforderlich ist, kann die Produktion der Direktreduktionsanlage und des Einschmelzvergasers ohne Schwierigkeiten unterbrochen werden.

Der nach dem erfindungsgemäßen Verfahren erzeugte Stahl hat eine hohe Reinheit und kann in üblicher Weise vergossen und warmverformt werden. Das Vergießen kann nach dem Stranggießverfahren durchgeführt werden. Der bei der Verarbeitung des Stahles anfallende Schrott wird nicht im eigenen Stahlwerk eingesetzt, sondern kann verkauft werden, wodurch man sich eine eigene Schrottwirtschaft mit den dafür erforderlichen Lagerflächen, Hebezeugen und Transporteinrichtungen ersparen kann.

In diesem Hüttenwerk kann der Roheisenabstich, das Chargieren des Konverters und die Übergabe des erschmolzenen Stahles auf die Gießeinrichtung in einer einzigen Halle erfolgen.

Durch die gegenseitig flexible Abstimmung von Roheisenerzeugung und Stahlerzeugung können Nebenanlagen, wie Medienwirtschaft, Sekundärentstaubung und Schlammbehandlung für beide Anlagenteile gemeinsam ausgeführt werden.

Die Erfindung ist in dem beiliegenden Blockschema näher erläutert.

Mit 1 ist eine Direktreduktionsanlage, vorzugsweise ein Reduktionsschachtofen, bezeichnet, der mit stückigem Erz aus der Chargiervorrichtung 2 chargiert wird. Der Schachtofen ist mit einem Einschmelzvergaser 3 verbunden, in welchem aus Kohle und sauerstoffhältigem Gas ein Reduktionsgas erzeugt wird, welches über eine Leitung 4 dem Reduktionsschachtofen zugeführt wird.

Im Schachtofen wird das stückige Erz zu Eisenschwamm 5 reduziert. Der Eisenschwamm wird zum Teil dem Einschmelzvergaser zugeführt und in der Einschmelzzone zu Roheisen 6 aufgeschmolzen. Das geschmolzene Roheisen wird in einem Puffergefäß 7, beispielsweise einer Rohrpfanne, gesammelt.

Zur Anlage gehört der Blasstahlkonverter 8, der in diesem Beispiel als Sauerstoffaufblaskonverter ausgeführt ist und mit einer von oben in den Konverter geführten Sauerstofflanze 9

(es folgen die ursprünglich eingereichten Seiten 5 und 6) betrieben wird. Der Konverter 8 wird über eine Transportlinie, welche in der dargestellten Ausführungsform Transportpfannen 10 umfaßt, zum Teil mit flüssigem Roheisen aus dem Puffergefäß 7 beschickt, und zum Teil mit Eisenschwamm, der über die Fördereinrichtung 11 aus dem Schachtofen abgezweigt wird. Der Eisenschwamm kann entweder in heißem Zustand direkt oder nach Abkühlung in einer Kühleinrichtung 12 und Zwischenlagerung in einem Vorratsbehälter 13 eingesetzt werden. Die Zugabe kann portionsweise oder kontinuierlich erfolgen.

Zur Erzeugung des Reduktionsgases und der zum Schmelzen des Eisenschwammes notwendigen Wärme wird dem Einschmelzvergaser Kohle und sauerstoffhältiges Gas durch die Leitungen 14 bzw. 15 zugeführt. Die im Einschmelzvergaser 3 entstehende Schlacke wird getrennt vom Roheisen durch den Abstich 16 abgestochen. Wenn das im Einschmelzvergaser erzeugte Gas zur Reduktion im Reduktionsschacht nicht zur Gänze benötigt wird, so wird das Überschußgas über die mit 17 bezeichnete Leitung abgezogen und anderen Verbrauchern zugeführt. Gleiches gilt für das am Kopf des Reduktionsschachtes durch die Leitung 18 abgezogene Topgas und das Konverterabgas, welches mittels der Leitung 19 abgeleitet wird.

Ein typisches Ausführungsbeispiel für das erfindungsgemäße Verfahren bei Verwendung eines 40 t-Aufblaskonverters ist das folgende :

Aus 103,2 t Erz/h mit einer Zusammensetzung von 93,17% $Fe_2O_3$, 0,02% S, 0,14% $CO_2$, 1,03% CaO, 0,07% MnO, 2,84% $SiO_2$, 0,08% MgO, 0,67% $Al_2O_3$, 0,03% $P_2O_5$ und 0,80% Restanteile werden in einem Direktreduktionsschachtofen unter Verwendung von Reduktionsgas mit einer Zusammensetzung von 67,78% CO, 2,46% $CO_2$, 0,43% $CH_4$, 27,17% $H_2$, 1,55% $H_2O$, 0,35% $N_2$ und 0,26% $H_2S$ 74,7 t Eisenschwamm mit einer Zusammensetzung von 93,3% Fe, 0,96% CaO, 3,94% $SiO_2$, 0,09% MnO, 0,96% $Al_2O_3$, 0,04% $P_2O_5$ und 4,2% Gesamtkohlenstoff (1,1% $Fe_3C$, 3,1% elementarer Kohlenstoff) erzeugt.

Der Eisenschwamm fällt mit einer Temperatur von 850°C an. 78,3% (58,5 t) dieser Menge werden in den Einschmelzvergaser eingesetzt und zu 55,6 t Roheisen/h mit einer Zusammensetzung von 4,10% C, 1,00% Si, 0,08% Mn, 0,05% P und 0,03% S und einer Temperatur von 1370°C erschmolzen. Dieses Roheisen wird in ein Puffergefäß, beispielsweise eine Rohrpfanne, abgestochen und als Flüssigeinsatz dem Konverter zugeführt. 21,7% (16,2 t) der erzeugten Eisenschwammenge wird ausgetragen, gekühlt und als Festeinsatz bzw. als Kühlmittel im Konverter verwendet.

Der Konverter hat eine Kapazität von 40 t und eine Stundenleistung von 63,3 t. Es wird Rohstahl mit einer Temperatur von 1650°C und einer Analyse von 0,04% C, 0,02% Mn, 0,020% P und 0,020% S erzeugt.

Die im Einschmelzvergaser eingesetzte Kohle hat eine Analyse von 73,56% C, 4,32% $H_2$, 0,76% $N_2$, 9,46% $O_2$, 0,72% S und 11,01% Asche.

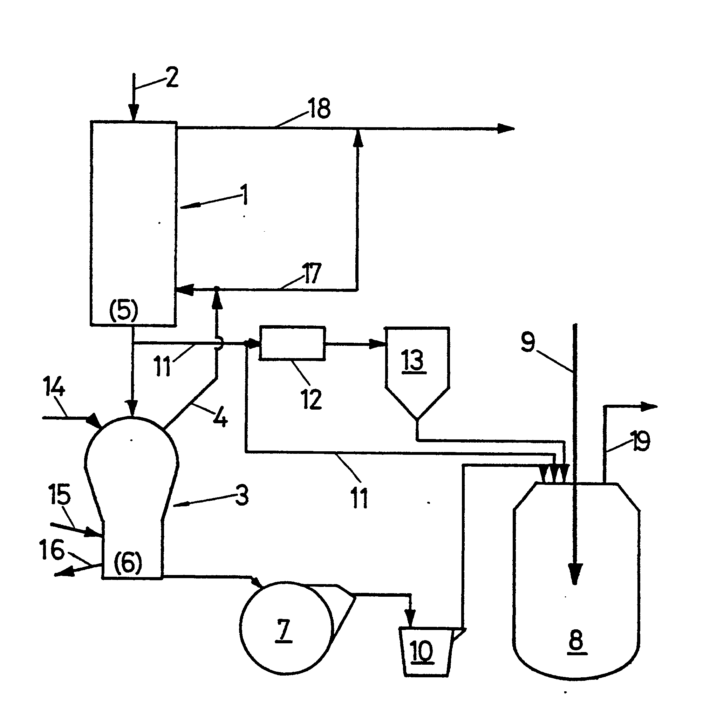

## Ansprüche

1. Verfahren zur Erzeugung von Stahl aus oxidischen Eisenträgern, wie Erz, in einem Hüttenwerk mit
   - einer Direktreduktionsanlage (1) zur Erzeugung von Eisenschwamm (5),
   - einem Einschmelzvergaser (3) und
   - einem einzigen Blasstahlkonverter (8), wobei die Direktreduktionsanlage (1) austragsseitig über Transporteinrichtungen für Eisenschwamm (5) sowohl mit dem Einschmelzvergaser (3) als auch mit dem Blasstahlkonverter (8) und der Einschmelzvergaser (3) über eine Transportlinie (10) für flüssiges Roheisen mit dem Blasstahlkonverter (8) in Verbindung stehen, wobei,

– stückige oxidische Eisenträger in die Reduktionszone der Direktreduktionsanlage (1) eingebracht und durch im Einschmelzvergaser (3) aus Kohle und sauerstoffhältigem Gas erzeugtes Reduktionsgas reduziert werden,

– das reduzierte Produkt – Eisenschwamm (5) – zum Teil in heißem Zustand in die Einschmelzzone des Einschmelzvergasers (3) eingebracht, dort erhitzt, verflüssigt und aufgekohlt wird, wobei flüssiges Roheisen (6) entsteht,

– zu einem anderen Teil aus der Direktreduktionsanlage (1) ausgetragen wird,

– flüssiges Roheisen (6) aus dem Einschmelzvergaser (3) sowie Eisenschwamm (5) aus der Direktreduktionsanlage (1) in den Blasstahlkonverter (8) chargiert und gefrischt werden und

– als Festeinsatz für den Blasstahlkonverter ausschließlich Eisenschwamm (5) verwendet wird.

## Claims

1. Process for the production of steel from oxicid ferrous carriers, such as ore, in a steel mill with

– a direct reduction plant (1) for the production of sponge iron (5),

– a meltdown gasifier (3) and

– a single blowing steel converter (8), the direct reduction plant (1), on its extraction side, communicating, via transporting means for sponge iron (5), both with the meltdown gasifier (3) and with the blowing steel converter (8), and the meltdown gasifier (3), via a transport line (10) for molten pig iron, communicating with the blowing steel converter (8), wherein

– lumpy oxidic ferrous carriers are introduced into the reduction zone of the direct reduction plant (1) and are reduced by reduction gas produced in the meltdown gasifier (3) from coal and oxygen containing gas,

– the reduced product – sponge iron (5) –, for one part, is introduced into the melting zone of the meltdown gasifier (3) in the hot state, is heated, liquefied and carburised there, with molten pig iron (6) forming,

– for another part, is discharged from the direct reduction plant (1),

– molten pig iron (6) from the meltdown gasifier (3) as well as sponge iron (5) from the direct reduction plant (1) are charged into the blowing steel converter (8) and refined, and

– sponge iron (5) is exclusively used as the solid charge for the blowing steel converter.

## Revendications

1. Procédé de production d'acier à partir de produits contenant du fer et de l'oxygène, comme du minerai, dans une aciérie comportant

– une installation de réduction directe (1) pour produire de l'éponge de fer (5),

– une installation de gazéification par mise en fusion (3) et

– un unique convertisseur d'acier travaillant par soufflage (8), procédé dans lequel l'installation de réduction directe (1) est reliée, côté extraction, par l'intermédiaire de dispositifs de transport pour l'éponge de fer (5), aussi bien avec l'installation de gazéification par mise en fusion (3) qu'avec le convertisseur d'acier travaillant par soufflage (8) et dans lequel l'installation de gazéification par mise en fusion (3) est reliée, par l'intermédiaire d'une ligne de transport (10) pour la fonte brute liquide, avec le convertisseur d'acier travaillant par soufflage (8), étant précisé que

– les produits granuleux contenant du fer et de l'oxygène sont amenés dans la zone de réduction de l'installation directe (1) et réduits par le gaz de réduction produit dans l'installation de gazéification par mise en fusion (3) à partir du charbon et du gaz contenant de l'oxygène,

– le produit réduit – éponge de fer (5) – est envoyé en partie, à l'état chaud, dans la zone de mise en fusion dans l'installation de gazéification par mise en fusion (3), y est réchauffé, liquéfié et recarburé, ce qui donne de la fonte brute liquide (6),

– est, pour une autre partie, extrait hors de l'installation de réduction directe (1),

– la fonte brute liquide (6) extraite de l'installation de gazéification par mise en fusion (3) ainsi que l'éponge de fer (5) extraite de l'installation de réduction directe (1) sont chargées et affinées dans le convertisseur d'acier par soufflage (8) et

– comme charge solide pour le convertisseur d'acier par soufflage, on emploie exclusivement de l'éponge de fer (5).